# EUROPEAN PATENT SPECIFICATION

(11) **EP 4 288 486 B1**
(45) Date of publication and mention of the grant of the patent: **21.05.2025**
(21) Application number: 22711111.9
(22) Date of filing: 26.01.2022
(51) Int. Cl.: C08L 23/06

(54) **LOW COEFFICIENT OF FRICTION POLYMERIC COMPOSITIONS**
POLYMERZUSAMMENSETZUNGEN MIT NIEDRIGEM REIBUNGSKOEFFIZIENTEN
COMPOSITIONS POLYMÈRES À FAIBLE COEFFICIENT DE FROTTEMENT

(30) Priority: 02.02.2021 US 202163144548 P
(43) Date of publication of application: 13.12.2023
(73) Proprietor: Dow Global Technologies LLC, Midland, MI 48674 (US)
(72) Inventor: BRIGANDI, Paul J., Collegeville, Pennsylvania 19426 (US); ESSEGHIR, Mohamed, Collegeville, Pennsylvania 19426 (US); SABA, Stacey A., Collegeville, Pennsylvania 19426 (US); CHAUDHARY, Amit K., Lake Jackson, Texas 77566 (US)
(74) Representative: Boult Wade Tennant LLP
(86) International application number: PCT/US2022/013882
(87) International publication number: WO 2022/169648

(56) References cited:
- US-A1- 2020 199 336
- US-A1- 2020 277 495

## Description

### BACKGROUND

### Field of the invention

The present disclosure generally relates to polymeric compositions and more specifically to polymeric compositions exhibiting a low coefficient of friction.

### Introduction

Wires and cables are often blown and/or pushed into existing conduits and ducts in order to increase fiber densification in structures. Doing so maximizes usage of both new and existing infrastructure. In order to effectively install wires and cables in such a manner, the polymeric composition of jacketing on the wires and cables need to have a low coefficient of friction ("COF"). The low coefficient of friction of the polymeric compositions ensures that the wires and cables do not resist sliding along surfaces during the installation. Typically, the polymeric composition of the jacketing needs to exhibit an unaged COF of 0.25 or less as measured according to ASTM D1894 in order to be most effective in the application.

Reduction of the COF of polymeric compositions has been attempted using a variety of additives. One example of such an additive is a slip agent. Slip agents function as a lubricant on the polymeric composition surface during processing or in use environments. These slip agents often function by migrating, or blooming, to the surface of the polymeric composition where they provide a coating that reduces the COF. Advantageously, the concentration of slip agent at the surface results in less slip agent being required in the polymer material overall. Examples of slip agents include erucamide and low molecular weight siloxanes.

Often, slip agents within a polymeric composition bloom over time thereby decreasing the jacketing's ability to exhibit a low COF. Premature blooming of the slip agent is disadvantageous because prolonged storage of the polymeric composition after manufacturing, but before the wire or cable is installed, may deteriorate the COF to an unusable level. As such, typically a polymeric composition must also exhibit a COF of 0.25 as measured according to ASTM D1894 after 336 hours of aging at 55°C (i.e., an "aged COF").

Attempts at lowering the coefficient of friction of polymeric compositions using higher molecular polydimethylsiloxane ("PDMS") have also been attempted. For example, United States Patent Application US2020/0199336A1 (the ‴336 publication') discloses a composition that uses a slip agent blend comprising a first PDMS having a weight average molecular weight ("Mw") from 30,000 g/mol to less than 300,000 g/mol; and a second PDMS having Mw of 300,000 g/mol to 2,000,000 g/mol, where the composition has a COF of 0.25. The '336 publication demonstrates that using only a PDMS having a Mw of 300,000 g/mol to 2,000,000 g/mol (e.g., CS1 and CS2) in a low-density polyethylene exhibits a high COF of 0.65 and 0.70 respectively.

In view of the foregoing, it would be surprising to discover a polymeric composition that uses a single polydimethylsiloxane having a Mw of 550,000 g/mol to 650,000 g/mol but is able to achieve both an unaged COF of 0.25 or less and an aged COF of 0.25 or less.

### SUMMARY OF THE INVENTION

The present invention offers a polymeric composition that uses a single polydimethylsiloxane having a Mw of 550,000 g/mol to 650,000 g/mol but is able to achieve both an unaged COF of 0.25 or less and an aged COF of 0.25 or less.

The present invention is a result of discovering that utilizing PDMS having a Mw of 550,000 g/mol to 650,000 g/mol in polymeric compositions comprising an ethylene-based polymer having a density of 0.926 g/cc to 0.970 g/cc are able to achieve the above noted properties. Without being bound by theory, it is believed that the Mw and viscosity of the PDMS results in a uniform dispersion within the ethylene-based polymer during melt compounding. The uniform dispersion of the PDMS thereby provides an unaged COF of 0.25. Further, the semicrystalline domains of the ethylene-based polymer and the Mw of the PDMS function to resist migration of the PDMS over time thereby retaining an aged COF of 0.25 unlike compositions that rely on additives that bloom.

The polymeric composition is particularly useful for forming the jacketing of wires and cables.

In a first aspect, the present invention provides a polymeric composition comprising an ethylene-based polymer having a density of 0.926 g/cc to 0.970 g/cc as measured according to ASTM D792 and a polydimethylsiloxane having a weight average molecular weight of 550,000 g/mol to 650,000 g/mol as measured according to Gel Permeation Chromatography. The composition is free of polydimethylsiloxane having a weight average molecular weight of from 30,000 g/mol to 300,000 g/mol as measured according to Gel Permeation Chromatography.

According to one embodiment of the present disclosure, the polymeric composition comprises 90 wt% or greater of the ethylene-based polymer based on the total weight of the polymeric composition.

According to one embodiment of the present disclosure, the polymeric composition comprises 10 wt% or less of the polydimethylsiloxane based on the total weight of the polymeric composition.

According to one embodiment of the present disclosure, the ethylene-based polymer has a density of 0.926 g/cc to 0.940 g/cc as measured according to ASTM D792.

According to one embodiment of the present disclosure, the polymeric composition comprises a fatty acid amide.

According to one embodiment of the present disclosure, the polymeric composition is free of a fatty acid amide.

According to one embodiment of the present disclosure, the polymeric composition further comprises a second polydimethylsiloxane having a weight average molecular weight of 2,000 g/mol to 15,000 g/mol as measured according to Gel Permeation Chromatography.

According to one embodiment of the present disclosure, the polymeric composition exhibits an Unaged Coefficient of Friction of 0.25 or less as measured according to ASTM D1894.

According to one embodiment of the present disclosure, the polymeric composition exhibits an Aged Coefficient of Friction of 0.25 or less as measured according to ASTM D1894 after 336 hours of aging at 55°C.

In a second aspect, the present invention provides a coated conductor comprising a conductor and the polymeric composition as described herein disposed around the conductor.

### DETAILED DESCRIPTION

As used herein, the term "and/or," when used in a list of two or more items, means that any one of the listed items can be employed by itself, or any combination of two or more of the listed items can be employed. For example, if a composition is described as containing components A, B, and/or C, the composition can contain A alone; B alone; C alone; A and B in combination; A and C in combination; B and C in combination; or A, B, and C in combination.

All ranges include endpoints unless otherwise stated.

Test methods refer to the most recent test method as of the priority date of this document unless a date is indicated with the test method number as a hyphenated two-digit number. References to test methods contain both a reference to the testing society and the test method number. Test method organizations are referenced by one of the following abbreviations: ASTM refers to ASTM International (formerly known as American Society for Testing and Materials); IEC refers to International Electrotechnical Commission; EN refers to European Norm; DIN refers to Deutsches Institut für Normung; and ISO refers to International Organization for Standards.

As used herein, the term weight percent ("wt%") designates the percentage by weight a component is of a total weight of the polymeric composition unless otherwise specified.

Melt index (I₂) values herein refer to values determined according to ASTM method D1238 at 190 degrees Celsius (°C) with 2.16 Kilogram (kg) mass and are provided in units of grams eluted per ten minutes ("g/10 min."). Melt index (I₂₁) values herein refer to values determined according to ASTM method D1238 at 190 degrees Celsius (°C) with 21.6 kg mass and are provided in units of grams eluted per ten minutes (g/10 min).

Density values herein refer to values determined according to ASTM D792 at 23°C and are provided in units of grams per cubic centimeter ("g/cc").

The term "shrinkage" as used herein, refers to cyclic temperature (or field) shrinkage of a jacketing or other sheath material, as measured according to IEC 60811-503 (shrinkage test for sheaths).

As used herein, Chemical Abstract Services registration numbers ("CAS#") refer to the unique numeric identifier as most recently assigned as of the priority date of this document to a chemical compound by the Chemical Abstracts Service.

### Polymeric composition

The polymeric composition comprises an ethylene-based polymer and a polydimethylsiloxane. The polymeric composition exhibits both an Unaged COF and an Aged COF. As used herein, the Unaged COF is the COF exhibited by the polymeric composition without any intentional ageing or delay of testing after its manufacture. As used therein, an Aged COF is the COF exhibited by the polymeric composition after having been held at a temperature of 55°C for 336 hours (i.e., two weeks) and without any intentional delay or aging prior to the heating.

The Unaged COF of the polymeric composition may be 0.01 or greater, or 0.02 or greater, or 0.04 or greater, or 0.06 or greater, or 0.08 or greater, or 0.10 or greater, or 0.12 or greater, or 0.14 or greater, or 0.16 or greater, or 0.18 or greater, or 0.20 or greater, or 0.22 or greater, or 0.24 or greater, while at the same time, 0.25 or less, or 0.24 or less, or 0.22 or less, or 0.20 or less, or 0.18 or less, or 0.16 or less, or 0.14 or less, or 0.12 or less, or 0.10 or less, or 0.08 or less, or 0.06 or less, or 0.04 or less, or 0.02 or less as measured according to ASTM D1894.

The Aged COF of the polymeric composition may be 0.01 or greater, or 0.02 or greater, or 0.04 or greater, or 0.06 or greater, or 0.08 or greater, or 0.10 or greater, or 0.12 or greater, or 0.14 or greater, or 0.16 or greater, or 0.18 or greater, or 0.20 or greater, or 0.22 or greater, or 0.24 or greater, while at the same time, 0.25 or less, or 0.24 or less, or 0.22 or less, or 0.20 or less, or 0.18 or less, or 0.16 or less, or 0.14 or less, or 0.12 or less, or 0.10 or less, or 0.08 or less, or 0.06 or less, or 0.04 or less, or 0.02 or less as measured according to ASTM D1894.

The polymeric composition may have a density of 0.940 g/cc or greater, or 0.941 g/cc or greater, or 0.942 g/cc or greater, or 0.943 g/cc or greater, or 0.944 g/cc or greater, or 0.945 g/cc or greater, or 0.946 g/cc or greater, or 0.947 g/cc or greater, or 0.948 g/cc or greater, or 0.949 g/cc or greater, or 0.950 g/cc or greater, or 0.951 g/cc or greater, or 0.952 g/cc or greater, or 0.953 g/cc or greater, or 0.954 g/cc or greater, while at the same time, 0.955 g/cc or less, or 0.954 g/cc or less, or 0.953 g/cc or less, or 0.952 g/cc or less, or 0.951 g/cc or less, or 0.950 g/cc or less, or 0.949 g/cc or less, or 0.948 g/cc or less, or 0.947 g/cc or less, or 0.946 g/cc or less, or 0.945 g/cc or less, or 0.944 g/cc or less, or 0.943 g/cc or less, or 0.942 g/cc or less, or 0.941 g/cc or less as measured according to ASTM D792.

The polymeric composition may exhibit a cyclic shrink of 3.0% or less as measured according to the test method provided in the Examples section. For example, the polymeric composition may exhibit a cyclic shrink of 3.0% or less, or 2.9% or less, or 2.8% or less, or 2.7% or less, or 2.6% or less, or 2.5% or less, or 2.4% or less, or 2.3% or less, or 2.2% or less, or 2.1% or less, or 2.0% or less, or 1.9% or less, or 1.8% or less, or 1.7% or less, or 1.6% or less, or 1.5% or less, or 1.4% or less, or 1.3% or less, or 1.2% or less, or 1.1% or less, or 1.0% or less, or 0.9% or less, or 0.8% or less, or 0.7% or less, or 0.6% or less, or 0.5% or less, or 0.4% or less, or 0.3% or less, or 0.2% or less, or 0.1% or less.

The polymeric composition may exhibit a 24-hour shrinkage of 1.00% or less as measured according to the test method provided in the Examples section. For example, the polymeric composition may exhibit a 24-hour shrinkage of 1.00% or less, or 0.95% or less, or 0.90% or less, or 0.85% or less, or 0.80% or less, or 0.75% or less, or 0.70% or less, or 0.65% or less, or 0.60% or less, or 0.55% or less, or 0.50% or less, or 0.45% or less, or 0.40% or less, or 0.35% or less, or 0.30% or less, or 0.25% or less, or 0.20% or less, or 0.15% or less, or 0.10% or less, or 0.05% or less.

The polymeric composition may have a melt index (I₂) of 0.1 g/10 min. or greater, or 0.3 g/10 min. or greater, or 0.5 g/10 min. or greater, or 0.7 g/10 min. or greater, or 0.8 g/10 min. or greater, or 0.9 g/10 min. or greater, or 1.0 g/10 min. or greater, or 1.5 g/10 min. or greater, or 2.0 g/10 min. or greater, or 2.5 g/10 min. or greater, or 3.0 g/10 min. or greater, or 3.5 g/10 min. or greater, or 4.0 g/10 min. or greater, or 4.5 g/10 min. or greater, or 5.0 g/10 min. or greater, or 5.5 g/10 min. or greater, or 6.0 g/10 min. or greater, or 6.5 g/10 min. or greater, or 7.0 g/10 min. or greater, or 7.5 g/10 min. or greater, or 8.0 g/10 min. or greater, or 8.5 g/10 min. or greater, or 9.0 g/10 min. or greater, or 9.5 g/10 min. or greater, while at the same time, 10.0 g/10 min. or less, or 9.5 g/10 min. or less, or 9.0 g/10 min. or less, or 8.5 g/10 min. or less, or 8.0 g/10 min. or less, or 7.5 g/10 min. or less, or 7.0 g/10 min. or less, or 6.5 g/10 min. or less, or 6.0 g/10 min. or less, or 5.5 g/10 min. or less, or 5.0 g/10 min. or less, or 4.5 g/10 min. or less, or 4.0 g/10 min. or less, or 3.5 g/10 min. or less, or 3.0 g/10 min. or less, or 2.5 g/10 min. or less, or 2.0 g/10 min. or less, or 1.5 g/10 min. or less, or 1.0 g/10 min. or less, or 0.9 g/10 min. or less, or 0.8 g/10 min. or less, or 0.7 g/10 min. or less, or 0.5 g/10 min. or less, or 0.3 g/10 min. or less.

The polymeric composition may have a high load melt index (I₂₁) of 50 g/10 min. or greater, or 55 g/10 min. or greater, or 60 g/10 min. or greater, or 65 g/10 min. or greater, or 70 g/10 min. or greater, or 75 g/10 min. or greater, or 80 g/10 min. or greater, or 85 g/10 min. or greater, or 90 g/10 min. or greater, or 95 g/10 min. or greater, while at the same time, 100 g/10 min. or less, or 95 g/10 min. or less, or 90 g/10 min. or less, or 85 g/10 min. or less, or 80 g/10 min. or less, or 75 g/10 min. or less, or 65 g/10 min. or less, or 60 g/10 min. or less, or 55 g/10 min. or less.

The polymeric composition may have a melt flow ratio (I₂₁/I₂) of 70 or greater, or 75 or greater, or 80 or greater, or 85 or greater, or 90 or greater, or 95 or greater, or 100 or greater, or 105 or greater, while at the same time, 110 or less, or 105 or less, or 100 or less, or 95 or less, or 90 or less, or 85 or less, or 80 or less, or 75 or less.

### Ethylene-based polymer

As noted above, the polymeric composition comprises the ethylene-based polymer. As used herein, "ethylene-based" polymers are polymers in which greater than 50 wt% of the monomers are ethylene though other co-monomers may also be employed. The ethylene-based polymer can include ethylene and one or more C₃-C₂₀ α-olefin comonomers such as propylene, 1-butene, 1 pentene, 4-methyl-1-pentene, 1-hexene, and 1-octene. The ethylene-based polymer can have a unimodal or a multimodal molecular weight distribution and can be used alone or in combination with one or more other types of ethylene-based polymers (e.g., a blend of two or more ethylene-based polymers that differ from one another by monomer composition and content, catalytic method of preparation, molecular weight, molecular weight distributions, densities, etc.). If a blend of ethylene-based polymers is employed, the polymers can be blended by any in-reactor or post-reactor process.

The ethylene-based polymer may comprise 50 wt% or greater, 60 wt% or greater, 70 wt% or greater, 80 wt% or greater, 85 wt% or greater, 90 wt% or greater, or 91 wt% or greater, or 92 wt% or greater, or 93 wt% or greater, or 94 wt% or greater, or 95 wt% or greater, or 96 wt% or greater, or 97 wt% or greater, or 97.5 wt% or greater, or 98 wt% or greater, or 99 wt% or greater, while at the same time, 99.5 wt% or less, or 99 wt% or less, or 98 wt% or less, or 97 wt% or less, or 96 wt% or less, or 95 wt% or less, or 94 wt% or less, or 93 wt% or less, or 92 wt% or less, or 91 wt% or less, or 90 wt% or less, or 85 wt% or less, or 80 wt% or less, or 70 wt% or less, or 60 wt% or less of ethylene as measured using Nuclear Magnetic Resonance (NMR) or Fourier-Transform Infrared (FTIR) Spectroscopy. Other units of the ethylene-based polymer may include C₃, or C₄, or C₆, or C₈, or C₁₀, or C₁₂, or C₁₆, or C₁₈, or C₂₀ α-olefins, such as propylene, 1-butene, 1-hexene, 4-methyl-1-pentene, and 1-octene.

The polymeric composition may comprise 80 wt% or greater, 85 wt% or greater, 90 wt% or greater, or 91 wt% or greater, or 92 wt% or greater, or 93 wt% or greater, or 94 wt% or greater, or 95 wt% or greater, or 96 wt% or greater, or 97 wt% or greater, or 97.5 wt% or greater, while at the same time, 98 wt% or less, or 97 wt% or less, or 96 wt% or less, or 95 wt% or less, or 94 wt% or less, or 93 wt% or less, or 92 wt% or less, or 91 wt% or less, or 90 wt% or less, or 85 wt% or less of the ethylene-based polymer based on the total weight of the polymeric composition.

The ethylene-based polymer has a density of 0.926 g/cc to 0.970 g/cc as measured according to ASTM D792. For example, the ethylene-based polymer may have a density of 0.926 g/cc or greater, or 0.928 g/cc or greater, or 0.930 g/cc or greater, or 0.932 g/cc or greater, or 0.934 g/cc or greater, or 0.936 g/cc or greater, or 0.938 g/cc or greater, or 0.940 g/cc or greater, or 0.942 g/cc or greater, or 0.944 g/cc or greater, or 0.946 g/cc or greater, or 0.948 g/cc or greater, or 0.950 g/cc or greater, or 0.952 g/cc or greater, or 0.954 g/cc or greater, or 0.956 g/cc or greater, or 0.958 g/cc or greater, or 0.960 g/cc or greater, or 0.962 g/cc or greater, or 0.964 g/cc or greater, or 0.966 g/cc or greater, or 0.968 g/cc or greater, while at the same time, 0.970 g/cc or less, or 0.968 g/cc or less, or 0.966 g/cc or less, or 0.964 g/cc or less, or 0.962 g/cc or less, or 0.960 g/cc or less, or 0.958 g/cc or less, or 0.956 g/cc or less, or 0.954 g/cc or less, or 0.952 g/cc or less, or 0.950 g/cc or less, or 0.948 g/cc or less, or 0.946 g/cc or less, or 0.944 g/cc or less, or 0.942 g/cc or less, or 0.940 g/cc or less, or 0.938 g/cc or less, or 0.936 g/cc or less, or 0.934 g/cc or less, or 0.932 g/cc or less, or 0.930 g/cc or less, or 0.928 g/cc or less as measured according to ASTM D792.

### Polydimethylsiloxane

The polymeric composition comprises polydimethylsiloxane. The PDMS may be unsubstituted or substituted. A "substituted PDMS" is a PDMS in which at least one methyl group of the PDMS is substituted with a substituent. Nonlimiting examples of substituents include halogen atoms (such as chlorine, fluorine, bromine, and iodine); halogen atom-containing groups (such as chloromethyl groups, perfluorobutyl groups, trifluoroethyl groups, and nonafluorohexyl groups); oxygen atom-containing groups (such as hydroxy groups, alkoxy groups (such as methoxy groups and ethoxy groups), (meth)acrylic epoxy groups, and carboxyl groups); nitrogen atom-containing groups (such as amino-functional groups, amido-functional groups, and cyano-functional groups); sulphur atom-containing groups (such as mercapto groups); hydrogen; C₂-C₁₀ alkyl groups (such as an ethyl group); C₂-C₁₀ alkynyl groups; alkenyl groups (such as vinyl groups and hexenyl groups); aryl groups (such as phenyl groups and substituted phenyl groups); cycloalkyl groups (such as cyclohexane groups); and combinations thereof. The substituted methyl group may be a terminal methyl group or a non-terminal methyl group. Nonlimiting examples of suitable substituted PDMS include trialkylsilyl terminated PDMS wherein at least one alkyl is a C₂-C₁₀ alkyl; dialkylhydroxysilyl terminated PDMS; dialkylhydrogensilyl terminated PDMS; dialkylalkenyl silyl terminated PDMS; dialkylvinylsilyl terminated PDMS, dimethylhydroxysilyl terminated PDMS, and dimethylvinylsilyl terminated PDMS.

The PDMS has a weight average molecular weight of 550,000 g/mol to 650,000 g/mol as measured according to Gel Permeation Chromatography described in greater detail below. For example, the PDMS may have a Mw of 550,000 g/mol or greater, or 560,000 g/mol or greater, or 570,000 g/mol or greater, or 580,000 g/mol or greater, or 590,000 g/mol or greater, or 600,000 g/mol or greater, or 610,000 g/mol or greater, or 620,000 g/mol or greater, or 630,000 g/mol or greater, or 640,000 g/mol or greater, while at the same time, 650,00 g/mol or less, or 640,000 g/mol or less, or 630,000 g/mol or less, or 620,000 g/mol or less, or 610,000 g/mol or less, or 600,000 g/mol or less, or 590,000 g/mol or less, or 580,000 g/mol or less, or 570,000 g/mol or less, or 560,000 g/mol or less as measured according to Gel Permeation Chromatography. The polymeric composition does not include, or is otherwise free of, a polydimethylsiloxane having a weight average molecular weight of 30,000 g/mol to 300,000 g/mol as measured according to Gel Permeation Chromatography. As used herein, the term "free of" is defined to mean that the polymeric composition comprises 0.01 wt% or less of the material it is free of.

The polymeric composition may comprise 0.1 wt% or greater, or 0.5 wt% or greater, or 1 wt% or greater, or 2 wt% or greater, or 3 wt% or greater, or 4 wt% or greater, or 5 wt% or greater, or 6 wt% or greater, or 7 wt% or greater, or 8 wt% or greater, or 9 wt% or greater, while at the same time, 10 wt% or less, or 9 wt% or less, or 8 wt% or less, or 7 wt% or less, or 6 wt% or less, or 5 wt% or less, or 4 wt% or less, or 3 wt% or less, or 2 wt% or less, or 1 wt% or less of the PDMS based on the total weight of the polymeric composition.

### Second Polydimethylsiloxane

The polymeric composition may comprise a second polydimethylsiloxane that has a lower Mw than the PDMS having a Mw of 550,000 g/mol to 650,000 g/mol. The second PDMS may be substituted or unsubstituted and may be terminated in any of the above-noted matters.

The second PDMS has a weight average molecular weight of 2,000 g/mol to 15,000 g/mol as measured according to Gel Permeation Chromatography. For example, the PDMS may have an Mw of 2,000 g/mol or greater, or 3,000 g/mol or greater, or 4,000 g/mol or greater, or 5,000 g/mol or greater, or 6,000 g/mol or greater, or 7,000 g/mol or greater, or 8,000 g/mol or greater, or 9,000 g/mol or greater, or 10,000 g/mol or greater, or 11,000 g/mol or greater, or 12,000 g/mol or greater, or 13,000 g/mol or greater, or 14,000 g/mol or greater, while at the same time, 15,00 g/mol or less, or 14,000 g/mol or less, or 13,000 g/mol or less, or 12,000 g/mol or less, or 11,000 g/mol or less, or 10,000 g/mol or less, or 9,000 g/mol or less, or 8,000 g/mol or less, or 7,000 g/mol or less, or 6,000 g/mol or less, or 5,000 g/mol or less, or 4,000 g/mol or less, or 3,000 g/mol or less as measured according to Gel Permeation Chromatography.

The polymeric composition may comprise 0.1 wt% or greater, or 0.5 wt% or greater, or 1 wt% or greater, or 2 wt% or greater, or 3 wt% or greater, or 4 wt% or greater, or 5 wt% or greater, or 6 wt% or greater, or 7 wt% or greater, or 8 wt% or greater, or 9 wt% or greater, while at the same time, 10 wt% or less, or 9 wt% or less, or 8 wt% or less, or 7 wt% or less, or 6 wt% or less, or 5 wt% or less, or 4 wt% or less, or 3 wt% or less, or 2 wt% or less, or 1 wt% or less of the PDMS based on the total weight of the polymeric composition.

### Fatty Acid Amide

The polymeric composition may comprise a fatty acid amide or may be free of fatty acid amide. A "fatty acid amide" denotes a molecule corresponding to Structure (I): 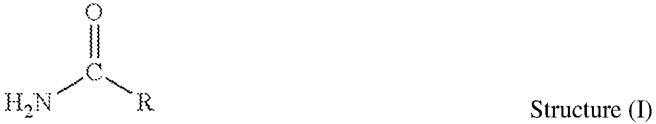 where R is a C₃ to C₂₇ alkyl moiety. R can be a C₁₁ to C₂₅, or a C₁₅ to C₂₃ alkyl moiety. R can be a C₂₁ alkyl moiety. R can be saturated, mono-unsaturated, or poly-unsaturated. Specific examples of fatty acid amides suitable for use include, but are not limited to erucamide, oleamide, palmitamide, stearamide, and behenamide. Additionally, the fatty acid amide can be a mixture of two or more fatty acid amides.

The polymeric composition may comprise 0.05 wt% or greater, or 0.1 wt% or greater, or 0.2 wt% or greater, or 0.3 wt% or greater, or 0.4 wt% or greater, or 0.5 wt% or greater, or 0.6 wt% or greater, or 0.7 wt% or greater, or 0.8 wt% or greater, or 0.9 wt% or greater, or 1.0 wt% or greater, or 1.1 wt% or greater, or 1.2 wt% or greater, or 1.3 wt% or greater, or 1.4 wt% or greater, while at the same time, 1.5 wt% or less, or 1.4 wt% or less, or 1.3 wt% or less, or 1.2 wt% or less, or 1.0 wt% or less, or 0.9 wt% or less, or 0.8 wt% or less, or 0.7 wt% or less, or 0.6 wt% or less, or 0.5 wt% or less, or 0.4 wt% or less, or 0.3 wt% or less, or 0.2 wt% or less of the fatty acid amide based on the total weight of the polymeric composition.

### Additives

The polymeric composition may comprise additional additives in the form of antioxidants, processing aids, coupling agents, ultraviolet stabilizers (including UV absorbers), antistatic agents, carbon black, additional nucleating agents, slip agents, lubricants, viscosity control agents, tackifiers, anti-blocking agents, surfactants, extender oils, acid scavengers, flame retardants and metal deactivators. The polymeric composition may comprise from 0.01 wt% to 5 wt% of one or more of the additional additives. The additives may be added individually as neat components, may be combined and/or may be added in one or more masterbatches.

The polymeric composition comprises one or more hindered amine light stabilizers. HALS are chemical compounds containing an amine functional group that are used as stabilizers in plastics and polymers. These compounds may be derivatives of tetramethylpiperidine and are primarily used to protect the polymers from the effects of free radical oxidation due to exposure to UV light. The HALS may include one or more of poly(4-hydroxy-2,2,6,6-tetramethyl-1-piperidineethanol-alt-1,4-butanedioic acid) (CAS# 65447-77-0); bis(2,2,6,6-tetramethyl-4-piperidyl) sebacate (CAS# 52829-07-9); di-(1,2,2,6,6-pentamethyl-4-piperidyl)-2-butyl-2-(3,5-di-tert-butyl-4-hydroxybenzyl)malonate (CAS# 63843-89-0); bis(1-octyloxy-2,2,6,6-tetramethyl-4-piperidyl) sebacate (CAS# 129757-67-1); poly[[6-[(1,1,3,3-tetramethylbutyl)amino]-s-triazine-2,4-diyl]-[(2,2,6,6-tetramethyl-4-piperidyl)imino]-hexamethylene-[(2,2,6,6-tetramethyl-4-piperidyl)imino] (CAS# 71878-19-8); 1,3,5-Triazine-2,4,6-triamine, N,N"'-1,2-ethanediylbis[N-[3-[[4,6-bis[butyl(1,2,2,6,6-pentamethyl-4-piperidinyl)amino]-1,3,5-triazin-2-yl]amino]propyl]-N',N"-dibutyl-N',N"-bis(1,2,2,6,6-pentamethyl-4-piperidinyl)- (CAS# 106990-43-6); 1,6-Hexanediamine, N,N'-bis(2,2,6,6-tetramethyl-4-piperidinyl)-, polymer with 2,4,6-trichloro-1,3,5-triazine, reaction products with, N-butyl-1-butanamine and N-butyl-2,2,6,6-tetramethyl-4-piperidinamine (CAS# 192268-64-7). Examples of the HALS are commercially available under the tradenames TINUVIN^{™} 622 and CHIMASSORB^{™} 944 from BASF, Ludwigshafen, Germany. The polymeric composition may comprise from 0.1 wt% to 1.0 wt% of the HALS based on the total weight of the polymeric composition. For example, the polymeric composition may comprise 0.1 wt% or greater, or 0.2 wt% or greater, or 0.3 wt% or greater, or 0.4 wt% or greater, or 0.5 wt% or greater, or 0.6 wt% or greater, or 0.7 wt% or greater, or 0.8 wt% or greater, or 0.9 wt% or greater, while at the same time, 1.0 wt% or less, or 0.9 wt% or less, or 0.8 wt% or less, or 0.7 wt% or less, or 0.6 wt% or less, or 0.5 wt% or less, or 0.4 wt% or less, or 0.3 wt% or less, or 0.2 wt% or less of the HALS based on the total weight of the polymeric composition.

The polymeric composition can include one or more particulate fillers, such as glass fibers or various mineral fillers including nano-composites. Fillers, especially those with elongated or platelet-shaped particles providing a higher aspect ratio (length/thickness), may improve modulus and post-extrusion shrinkage characteristics. The filler(s) can have a median size or d50 of less than 20 µm, less than 10 µm, or less than 5 µm. The fillers may be surface treated to facilitate wetting or dispersion in the polymeric composition. Specific examples of suitable fillers include, but are not limited to, calcium carbonate, silica, quartz, fused quartz, talc, mica, clay, kaolin, wollastonite, feldspar, aluminum hydroxide, and graphite. Fillers may be included in the polymeric composition in an amount ranging from 2 to 30 wt%, or from 5 to 30 wt% based on the total weight of the polymeric composition.

The processing aids may comprise metal salts of fluororesin such as polytetrafluoroethylene or fluorinated ethylene propylene; carboxylic acids such as zinc stearate or calcium stearate; fatty acids such as stearic acid, oleic acid, or erucic acid; fatty amides such as stearamide, oleamide, erucamide, or N,N'-ethylene bis-stearamide; polyethylene wax; oxidized polyethylene wax; polymers of ethylene oxide; copolymers of ethylene oxide and propylene oxide; vegetable waxes; petroleum waxes; non-ionic surfactants; silicone fluids and polysiloxanes.

The antioxidants may comprise hindered phenols such as tetrakis[methylene(3,5-di-tert-butyl-4-hydroxyhydro-cinnamate)]methane; bis[(beta-(3,5-ditert-butyl-4-hydroxybenzyl) methylcarboxyethyl)]-sulphide, 4,4'-thiobis(2-methyl-6-tert-butylphenol), 4,4'-thiobis(2-tert-butyl-5-methylphenol), 2,2'-thiobis(4-methyl-6-tert-butylphenol), and thiodiethylene bis(3,5-di-tert-butyl-4-hydroxy)-hydrocinnamate; phosphites and phosphonites such as tris(2,4-di-tert-butylphenyl)phosphite and di-tert-butylphenyl-phosphonite; thio compounds such as dilaurylthiodipropionate, dimyristylthiodipropionate, and distearylthiodipropionate; various siloxanes; polymerized 2,2,4-trimethyl-1,2-dihydroquinoline, n,n'-bis(1,4-dimethylpentyl-p-phenylenediamine), alkylated diphenylamines, 4,4'-bis(alpha, alphadimethylbenzyl)diphenylamine, diphenyl-p-phenylenediamine, mixed di-aryl-p-phenylenediamines, and other hindered amine anti-degradants or stabilizers.

### Compounding and Coated Conductor Formation

The components of the polymeric composition can be added to a batch or continuous mixer for melt blending to form a melt-blended composition. The components can be added in any order or first preparing one or more masterbatches for blending with the other components. The melt blending may be conducted at a temperature above the melting point of the highest melting polymer. The melt-blended composition is then delivered to an extruder or an injection-molding machine or passed through a die for shaping into the desired article, or converted to pellets, tape, strip or film or some other form for storage or to prepare the material for feeding to a next shaping or processing step. Optionally, if shaped into pellets or some similar configuration, then the pellets, etc. can be coated with an anti-block agent to facilitate handling while in storage.

Examples of compounding equipment used include internal batch mixers, such as a BANBURY^{™} or BOLLING^{™} internal mixer. Alternatively, continuous single, or twin screw, mixers can be used, such as FARRELL^{™} continuous mixer, a WERNER ^{™} and PFLEIDERER^{™} twin screw mixer, or a BUSS^{™} kneading continuous extruder. The type of mixer utilized, and the operating conditions of the mixer, will affect properties of the composition such as viscosity, volume resistivity, and extruded surface smoothness.

A coated conductor may be made from the polymeric composition. The coated conductor includes a conductor and a coating. The coating including the polymeric composition. The polymeric composition is at least partially disposed around the conductor to produce the coated conductor. The conductor may comprise a conductive metal or an optically transparent structure.

The process for producing a coated conductor includes mixing and heating the polymeric composition to at least the melting temperature of the polymeric components in an extruder to form a polymeric melt blend, and then coating the polymeric melt blend onto the conductor. The term "onto" includes direct contact or indirect contact between the polymeric melt blend and the conductor. The polymeric melt blend is in an extrudable state.

The polymeric composition is disposed on and/or around the conductor to form a coating. The coating may be one or more inner layers such as an insulating layer. The coating may wholly or partially cover or otherwise surround or encase the conductor. The coating may be the sole component surrounding the conductor. Alternatively, the coating may be one layer of a multilayer jacket or sheath encasing the conductor. The coating may directly contact the conductor. The coating may directly contact an insulation layer surrounding the conductor.

### Examples

### Materials

EP1 is a medium density polyethylene comprising carbon black and having a density of 0.945 g/cc and a melt flow rate of 0.75 g per 10 minutes at 190°C. EP1 is available from The Dow Chemical Company, Midland, Michigan.

EP2 is a medium density polyethylene having a density of 0.935 g/cc and a melt flow rate of 0.65 g per 10 minutes at 190°C. EP2 is available from The Dow Chemical Company, Midland, Michigan.

EP3 is a UNIPOL^{™} II bimodal medium density polyethylene having a density of 0.935 g/cc and a melt flow rate of 0.79 g per 10 minutes at 190°C.

PA is a fluororesin processing aid commercially available under the tradename DYNAMAR^{™} FX 5912 available from 3M, Saint Paul, Minnesota, USA.

Si Gum is a blend 35 wt% polydimethylsiloxane that is dimethylvinylsiloxy-terminated with the balance being EP2. The PDMS of the Si Gum is available from the Dow Chemical Company, Midland, MI.

Si Liquid is a blend 5 wt% polydimethylsiloxane that is trimethylsiloxy terminated and has a Mw of between 5,000 g/mol to 12,000 g/mol as measured according to Gel Permeation Chromatography with the balance being EP2. The PDMS of the Si Liquid is available from the Dow Chemical Company, Midland, MI.

FAA is Erucamide having a CAS# of 112-84-5 and is available as CRODAMIDE^{™} ER from Croda, East Yorkshire, United Kingdom.

CB is a carbon black masterbatch having 45 wt% carbon black and is commercially available as AXELERON^{™} GP A-0037 BK CPD from the Dow Chemical Company, Midland, MI.

### Sample Preparation

Inventive examples ("IE") 1-6 and comparative examples ("CE") 1-4 were prepared a Mini laboratory BANBURY^{™} (1.2 kg) internal batch mixer with standard two wing polyethylene rotors. All materials of the examples were added at the same time and mixed to a drop temperature of 160°C. IE7, IE8, CE5 and CE6 were prepared on a BANBURY^{™} internal mixer with standard two wing polyethylene rotors. All materials were added at the same time and mixed to a drop temperature of 175°C.

Plaques of the examples were prepared by compression molding pellets on a pre-heated Arbor press at 180°C. The pellets were placed into 1.905 millimeter mold. The examples were heated to 180°C for four minutes, then pressed for three minutes at a pressure 3.45 megapascals ("MPa") followed by three minutes at a pressure of 17.24 MPa. The examples were cooled in the press at 15°C per minute and then conditioned per testing requirements. Plaques intended for heat aging were placed in a preheated oven at 55°C and removed after 336 hours. The plaques were then conditioned at 23°C at 50% relative humidity for 24 hours prior to testing.

Jackets of the examples were prepared via extrusion of the polymeric composition onto a conductor using a 6.35 cm wire extrusion line from Davis-Standard at 91 meters per minute with a 0.8 mm wall thickness at 180°C- 240°C. The conductor was removed, and the jacket samples were conditioned at room temperature for 24 hours before shrinkage testing.

### Test Methods

Gel Permeation Chromatography: Weight average molecular of the polydimethylsiloxane is measured by GPC (Viscotek^{™} GPC Max) using a triple detection capability. The Viscotek^{™} TDA305 unit is equipped with a differential refractometer, an online differential pressure viscometer, and low angle light scattering (LALS: 7° and 90° angles of detection). The mobile phase is Toluene HPLC grade. The columns are two PL Gel Mixed C from Varian-(7.5*300 mm, 5 µm particle size) and a PL Gel Guard column from Varian-(7.5*300 mm) 5 fractom Injection volume with a flow of 1 mL/min and a run time of 37 min. The column and detector temperature is 40°C. The software used is Omnisec 4.6.1 (Viscotek^{™} ). The detectors are calibrated by injection of a narrow polystyrene standard (Mw 68,100 g/mol) of a known concentration.

Melt index ("MI') was tested according to ASTM D1238 for both I₂ (2.16 kg at 190°C) and I₂₁ (21.6kg at 190°C). Melt flow rate is the ratio ('MFR") of the melt index at I₂₁ divided by I₂.

Density was tested according to ASTM D792 on compression molded specimens of 1.27 millimeter thickness.

Coefficient of friction was measured according to ASTM D1894 using a tribometer. The substrate against which the COF of the samples is measured is a high-density polyethylene sheet. For each sample, a new substrate is used. Before testing, samples were conditioned at 23°C and 50% relative humidity for 48 hours.

Cyclic temperature shrink back testing was performed on jacket samples removed from the conductor after wire production. Cyclic temperature shrink back was conducted by conditioning the jacket sample in an oven at a ramp rate of 0.5°C/min. from 40°C to 100°C. The sample was held at 100°C for 60 minutes and then the temperature was ramped back down to 40°C at a rate of 0.5°C/min. The jacket was held at 40°C for 20 minutes and the temperature cycle was then repeated four more times for a total of five cycles. Shrinkage is reported as a percent change in length of the jacket from prior to testing to after testing and was measured using a ruler precise to 1.6 mm on 61 cm long specimens. Twenty-four hour ("24 Hr") shrinkage was measured by removing the conductor from a wire sample and cutting a 1.22 meter (4 foot) sample and measuring the length of the sample after 24 hours of storage at 23°C

PDMS content was calculated by multiplying the wt% of PDMS in the Si Gum or Si Liquid by the wt% of the Gum or Liquid in the example.

### Results

Table 1 provides the composition and the properties of IE1-8 and CE1-CE6. Where indicated, "nm" represents that a property was not measured.

**Table 1**

| ***Material (wt%)*** | **CE1** | **IE1** | **IE2** | **IE3** | **CE2** | **CE3** | **IE4** | **IE5** | **IE6** | **CE4** |
|---|---|---|---|---|---|---|---|---|---|---|
| EP1 | 100 | 95.7 | 92.9 | 90.0 | 97.0 | 94.0 | 88.3 | 99.2 | 97.6 | 98.9 |
| EP2 | | | | | | | | | | |
| EP3 | | | | | | | | | | |
| Si Gum | | 4.3 | 7.2 | 10.0 | | | 5.7 | 0.7 | 1.4 | |
| Si Liquid | | | | | 3.0 | 6.0 | 6.0 | | | 1.0 |
| FAA | | | | | | | | 0.1 | 1.0 | 0.1 |
| CB | | | | | | | | | | |
| PA | | | | | | | | | | |
| Total | 100 | 100 | 100 | 100 | 100 | 100 | 100 | 100 | 100 | 100 |
| PDMS Content | 0 | 1.5 | 2.5 | 3.5 | 0.2 | 0.3 | 2.3 | 0.4 | 1.5 | 0.1 |
| **Results** | | | | | | | | | | |
| MI I₂ (g/10 min.) | 0.8 | 0.8 | 0.8 | 0.8 | 0.9 | 0.9 | 0.8 | 0.8 | 0.9 | 0.8 |
| MI I₂₁ (g/10 min.) | 54.7 | 66.2 | 62.0 | 81.5 | 59.4 | 63.1 | 73.3 | 65.3 | 71.8 | 67.3 |
| MFR | 67.2 | 80.8 | 76.1 | 96.8 | 68.9 | 72.9 | 92.2 | 81.0 | 78.4 | 85.5 |
| Density (g/cc) | nm | nm | nm | nm | nm | nm | nm | nm | nm | nm |
| 24 Hr Shrinkage (%) | nm | nm | nm | nm | nm | nm | nm | nm | nm | nm |
| Cyclic Shrinkage (%) | nm | nm | nm | nm | nm | nm | nm | nm | nm | nm |
| Unaged COF | 0.32 | 0.18 | 0.19 | 0.22 | 0.33 | 0.33 | 0.20 | 0.16 | 0.12 | 0.16 |
| COF RT | 0.30 | 0.20 | 0.19 | 0.20 | 0.30 | 0.29 | 0.18 | 0.09 | 0.09 | 0.08 |
| Aged COF 55°C | 0.24 | 0.20 | 0.23 | 0.20 | 0.28 | 0.22 | 0.17 | 0.22 | 0.12 | 0.28 |

**Table 1 continued**

| ***Material (wt%)*** | **IE7** | **IE8** | **CE5** | **CE6** |
|---|---|---|---|---|
| EP1 | | | | |
| EP2 | 87.2 | | 91.3 | |
| EP3 | | 87.2 | | 91.3 |
| Si Gum | 7.2 | 7.2 | | |
| Si Liquid | | | 3.0 | 3.0 |
| FAA | | | | |
| CB | 5.7 | 5.7 | 5.7 | 5.7 |
| PA | 0.02 | 0.02 | 0.02 | 0.02 |
| Total | 100 | 100 | 100 | 100 |
| PDMS Content | 2.5 | 2.5 | 0.2 | 0.2 |

| **Results** | | | | |
|---|---|---|---|---|
| MI I₂ (g/10 min.) | 0.9 | 0.8 | 0.8 | 0.8 |
| MI I₂₁ (g/10 min.) | 67.9 | 80.6 | 62.6 | 65.5 |
| MFR | 79.2 | 95.5 | 74.3 | 80.3 |
| Density (g/cc) | 0.947 | 0.948 | 0.946 | 0.947 |
| 24 Hr Shrinkage (%) | 0.56 | 0.63 | 0.59 | 0.61 |
| Cyclic Shrinkage (%) | 2.54 | 2.54 | 2.73 | 2.48 |
| Unaged COF | 0.20 | 0.23 | 0.30 | 0.28 |
| COF RT | 0.19 | 0.20 | 0.26 | 0.27 |
| Aged COF 55°C | 0.18 | 0.19 | 0.16 | 0.16 |

As can be seen from Table 1, the incorporation of the silicone gum in IE1-IE3 permits the compositions to exhibit an unaged COF of less than 0.25, but also COF stability as demonstrated by the aged COF of IE1-IE4 also being below 0.25. While IE4-6 demonstrate that low molecular weight silicones and erucamide may be beneficially added, CE2-CE6 demonstrate that without the polydimethylsiloxane having a weight average molecular weight of 550,000 g/mol to 650,000 g/mol, the compositions are unable to meet the unaged COF requirements or do not demonstrate COF stability after aging.

## Claims

1. A polymeric composition, comprising:
an ethylene-based polymer having a density of 0.926 g/cc to 0.970 g/cc as measured according to ASTM D792; and
a polydimethylsiloxane having a weight average molecular weight of 550,000 g/mol to 650,000 g/mol as measured according to Gel Permeation Chromatography, wherein the composition is free of polydimethylsiloxane having a weight average molecular weight of from 30,000 g/mol to 300,000 g/mol as measured according to Gel Permeation Chromatography.

2. The polymeric composition of claim 1, wherein the polymeric composition comprises 90 wt% or greater of the ethylene-based polymer based on the total weight of the polymeric composition.

3. The polymeric composition of claim 1, wherein the polymeric composition comprises 10 wt% or less of the polydimethylsiloxane based on the total weight of the polymeric composition.

4. The polymeric composition of claim 1, wherein the ethylene-based polymer has a density of 0.926 g/cc to 0.940 g/cc as measured according to ASTM D792.

5. The polymeric composition of claim 1, wherein the polymeric composition comprises a fatty acid amide.

6. The polymeric composition of claim 1, wherein the polymeric composition is free of a fatty acid amide.

7. The polymeric composition of claim 6, further comprising:
a second polydimethylsiloxane having a weight average molecular weight of 2,000 g/mol to 15,000 g/mol as measured according to Gel Permeation Chromatography.

8. The polymeric composition of any one of claims 1-7, wherein the polymeric composition exhibits an Unaged Coefficient of Friction of 0.25 or less as measured according to ASTM D1894.

9. The polymeric composition of claim 8, wherein the polymeric composition exhibits an Aged Coefficient of Friction of 0.25 or less as measured according to ASTM D1894 after 336 hours of aging at 55°C.

10. A coated conductor, comprising:
a conductor; and
the polymeric composition of claim 1 disposed around the conductor.

## Patentansprüche

1. Polymerzusammensetzung, umfassend:
ein Polymer auf Ethylenbasis, das eine Dichte von 0,926 g/cm³ bis 0,970 g/cm³, gemessen gemäß ASTM D792, aufweist; und
ein Polydimethylsiloxan, das ein gewichtsdurchschnittliches Molekulargewicht von 550.000 g/mol bis 650.000 g/mol, gemessen mittels Gelpermeationschromatographie, aufweist, wobei die Zusammensetzung frei von Polydimethylsiloxan ist, das ein gewichtsdurchschnittliches Molekulargewicht von 30.000 g/mol bis 300.000 g/mol, gemessen mittels Gelpermeationschromatographie, aufweist.

2. Polymerzusammensetzung nach Anspruch 1, wobei die Polymerzusammensetzung zu 90 Gew.-% oder mehr das Polymer auf Ethylenbasis, bezogen auf das Gesamtgewicht der Polymerzusammensetzung, umfasst.

3. Polymerzusammensetzung nach Anspruch 1, wobei die Polymerzusammensetzung zu 10 Gew.-% oder weniger das Polydimethylsiloxan, bezogen auf das Gesamtgewicht der Polymerzusammensetzung, umfasst.

4. Polymerzusammensetzung nach Anspruch 1, wobei das Polymer auf Ethylenbasis eine Dichte von 0,926 g/cm³ bis 0,940 g/cm³, gemessen gemäß ASTM D792, aufweist.

5. Polymerzusammensetzung nach Anspruch 1, wobei die Polymerzusammensetzung ein Fettsäureamid umfasst.

6. Polymerzusammensetzung nach Anspruch 1, wobei die Polymerzusammensetzung frei von einem Fettsäureamid ist.

7. Polymerzusammensetzung nach Anspruch 6, ferner umfassend:
ein zweites Polydimethylsiloxan, das ein gewichtsdurchschnittliches Molekulargewicht von 2.000 g/mol bis 15.000 g/mol, gemessen mittels Gelpermeationschromatographie, aufweist.

8. Polymerzusammensetzung nach einem der Ansprüche 1 bis 7, wobei die Polymerzusammensetzung einen ungealterten Reibungskoeffizienten von 0,25 oder weniger, gemessen gemäß ASTM D1894, vorweist.

9. Polymerzusammensetzung nach Anspruch 8, wobei die Polymerzusammensetzung nach 336 Stunden Alterung bei 55 °C einen gealterten Reibungskoeffizienten von 0,25 oder weniger, gemessen gemäß ASTM D1894, aufweist.

10. Beschichteter Leiter, umfassend:
einen Leiter; und
die Polymerzusammensetzung nach Anspruch 1, die um den Leiter herum angeordnet ist.

## Revendications

1. Composition polymère, comprenant :
un polymère à base d'éthylène ayant une densité de 0,926 g/cc à 0,970 g/cc, mesurée selon la norme ASTM D792 ; et
un polydiméthylsiloxane ayant un poids moléculaire moyen de 550 000 g/mol à 650 000 g/mol, mesuré selon la chromatographie par perméation de gel, dans laquelle la composition est exempte de polydiméthylsiloxane ayant un poids moléculaire moyen de 30 000 g/mol à 300 000 g/mol, mesuré selon la chromatographie par perméation de gel.

2. Composition polymère selon la revendication 1, dans laquelle la composition polymère comprend de 90 % en poids ou plus de polymère à base d'éthylène sur la base d'au poids total de la composition polymère.

3. Composition polymère selon la revendication 1, dans laquelle la composition polymère comprend de 10 % en poids ou moins du polydiméthylsiloxane sur la base du poids total de la composition polymère.

4. Composition polymère selon la revendication 1, dans laquelle le polymère à base d'éthylène a une masse volumique allant de 0,926 g/cm³ à 0,940 g/cm³, telle que mesurée selon la norme ASTM D792.

5. Composition polymère selon la revendication 1, dans laquelle la composition polymère comprend un amide d'acide gras.

6. Composition polymère selon la revendication 1, dans laquelle la composition polymère est exempte d'un amide d'acide gras.

7. Composition polymère selon la revendication 6, comprenant en outre .
un second polydiméthylsiloxane ayant un poids moléculaire moyen en poids allant de 2 000 g/mol à 15 000 g/mol, tel que mesuré selon la chromatographie par perméation de gel.

8. Composition polymère selon l'une quelconque des revendications 1 à 7, dans laquelle la composition polymère présente un coefficient de frottement non vieilli de 0,25 ou moins, tel que mesuré selon la norme ASTM D1894.

9. Composition polymère selon la revendication 8, dans laquelle la composition polymère présente un coefficient de frottement vieilli de 0,25 ou moins, tel que mesuré selon la norme ASTM D1894 après 336 heures de vieillissement à 55 °C.

10. Conducteur revêtu, comprenant :
un conducteur ; et
la composition polymère selon la revendication 1 disposée autour du conducteur.
